# FASCICULE DE BREVET EUROPEEN

(11) **EP 0 509 862 B1**
(45) Date de publication et mention de la délivrance du brevet: **10.05.1995**
(21) Numéro de dépôt: 92400823.8
(22) Date de dépôt: 26.03.1992
(51) Int. Cl.: B60J 10/12, B60J 1/17, B60J 10/06

(54) **Vitrage encapsulé, en particulier vitrage pour toit ouvrant**
Eingekapselte Verglasung, insbesondere für Schiebedach
Encapsulated glazing, especially for sun roof

(30) Priorité: 05.04.1991 FR 9104153
(43) Date de publication de la demande: 21.10.1992
(73) Titulaire: SAINT-GOBAIN VITRAGE, 92400 Courbevoie (FR)
(72) Inventeur: Le Lievre, Patrick, F-60300 Apremont (FR); Zanella, Guy, F-73160 Cognin (FR)
(74) Mandataire: Le Vaguerèse, Sylvain Jacques

(56) Documents cités:
- EP-A- 0 304 694
- EP-A- 0 412 299
- EP-A- 0 429 361

## Description

L'invention concerne un vitrage encapsulé par une matière plastique du type divulgué, par exemple, par FR-A-2 577 484 ou EP-A-0 304 694 et, en particulier, un nouveau vitrage encapsulé pouvant être utilisé, notamment en tant que panneau mobile de toit ouvrant ou en tant que vitrage coulissant dans les véhicules de transport.

Des vitrages encapsulés, utilisés notamment en tant que panneau mobile de toit ouvrant, sont connus. Un des problèmes rencontrés dans la réalisation de tels vitrages est la difficulté d'obtenir une rigidité suffisante pour l'ensemble, nécessaire à l'application envisagée.

Il est connu d'utiliser des inserts, comme par exemple décrits dans la demande EP-A-0 304 694, qui améliorent la fixation du vitrage à la baie de carrosserie.

Afin d'améliorer la rigidité du vitrage encapsulé, une solution connue décrite, par exemple dans la publication du brevet FR-A-2 577 484, est d'utiliser un cadre métallique de renforcement soutenant la plaque de verre en son bord. La résine utilisée pour l'encapsulation est du chlorure de polyvinyle ou du polyuréthane. Cette solution présente des inconvénients.

Outre la présence d'un cadre de renforcement, le brevet FR-A-2 577 484 suggère une liaison supplémentaire entre la plaque et le cadre de renforcement du type collage ou soudure. Il préconise de plus l'utilisation d'un cordon entre la plaque et le cadre afin de limiter la progression de la matière plastique entre ce cadre et la plaque au cours du moulage.

La présence de ce cadre de renforcement ainsi que des éléments annexes l'accompagnant, impliquent une multiplication des opérations de montage, d'où une cadence de production ralentie et un coût élevé.

La demande de brevet EP-A-0 429 361 n'est opposable qu'au titre de la nouveauté à l'objet de la revendication 1, car elle est comprise dans l'état de la technique au titre de l'Art.54(3) CBE et, de ce fait, n'est pas prise en considération pour l'appréciation de l'activité inventive, comme le précise l'Art.56 CBE. Cette demande EP-A-0 429 361 divulgue la présence d'un cadre de rigidification, noyé dans le joint d'étanchéité, qui est lui-même surmoulé sur la périphérie du vitrage. Ce cadre peut être métallique ou en matériau composite. Quel que soit sa nature, ce cadre nécessite une opération supplémentaire correspondant à sa mise en place. Par ailleurs, lorsque le cadre est en un matériau composite, ce document ne mentionne pas la quantité de fibres présentes ni les caractéristiques du joint d'étanchéité.

La présente invention obvie à ces inconvénients.

La présente invention a pour objet un vitrage comprenant un substrat transparent monolithique ou feuilleté entouré sur au moins une partie de sa périphérie d'un profil en une matière plastique polymérique, obtenue par encapsulation du vitrage (Vitrage du type divulgué par exemple par FR-A-2 577 484 ou EP-A-0 304 694), vitrage dans lequel la matière plastique injectée comprend une résine bas retrait, et 10 % à 50 % de fibres de renforcement, tel que le module de flexion de la matière plastique renforcée soit supérieur à 7000 MPa et, de préférence, supérieur à 10000 MPa. Cette valeur a été mesurée selon la norme NFT 51001.

La grande rigidité inhérente à la nature de la matière plastique renforcée choisie, permet d'exclure la présence d'un cadre de renforcement.

En tant que résine, on peut utiliser des résines polyesters insaturés, polyuréthanes, polyvinyliques, polyoléfines, polyacétals, polycarbonates, polyamides 6, polyamides 6/6 ou polyphénylène-oxydes. On peut également employer des copolymères du type acrylonile/butadiène/styrène, styrène/acrylonitrile.

De préférence, on utilise des copolymères du type acrylonitrile/butadiène/styrène, styrène/acrylonitrile ou les polymères du type polyacétals, polycarbonates, polyamides 6, polyamides 6/6, polyphénylène-oxydes, polyesters. De façon particulièrement préférée, on utilise une résine résistante aux vieillissements en présence des agents extérieurs tels les rayonnements, l'humidité, la température, ..., à savoir le polyvinylester. Grâce à ce choix préféré, l'opération d'enduction du matériau par une peinture ou un vernis n'est plus obligatoire.

En tant que fibres de renforcement, on peut utiliser des fibres de verre, ou des fibres organiques telles les fibres de carbone, de Kevlar. De façon préférée, pour des raisons de coût et de facilité de mise en oeuvre, on utilise les fibres de verre. Avantageusement, leur longueur peut varier de 5 à 15 mm.

Dans la suite de la description, on appelle résine l'ensemble formé par le (ou les) polymère (s) ou copolymère (s), les additifs de formulation tels que les charges, les pigments, les additifs anti-retrait, etc... On appelle matière plastique le produit composite formé de la résine et des fibres de renforcement.

Outre le choix du matériau, la rigidité du vitrage encapsulé peut être améliorée par des éléments de structure tels que rainures, nervures, équerres... formés dans la matière plastique au cours de l'opération de surmoulage. En outre, ces éléments de structure peuvent apporter de nouvelles fonctions au vitrage encapsulé. Par exemple, ils peuvent faire office de glissière.

Sous un mode de réalisation de l'invention, le vitrage peut comporter des inserts , notamment des inserts fonctionnels, métalliques ou plastiques, portés par le profil en plastique obtenu par encapsulation.

Sous un autre mode de réalisation de l'invention, le profil obtenu par encapsulation affleure la face supérieure du substrat transparent, évitant ainsi la présence d'une surépaisseur d'un aspect inesthétique, et améliorant ainsi le coefficient de pénétration dans l'air.

L'incorporation de fibres de renforcement, en particulier de fibres de verre, dans une résine lors de la mise en oeuvre de la technique d'encapsulation d'un substrat transparent, telle une feuille de verre, est source de difficultés.

Lors du moulage par injection de la matière plastique dans le moule contenant le substrat transparent, des forces de cisaillement importantes sont présentes, dues principalement au cheminement de la matière à travers le dispositif d'injection. Ce parcours peut provoquer une destruction des propriétés de la matière et, en particulier, une cassure des fibres de verre, lorsque la matière injectée est une matière renforcée par de telles fibres.

En outre, la présence de fibres de renforcement, en proportion importante, influe sur la viscosité initiale, la vitesse de polymérisation et l'adhésion substrat transparent/matière plastique.

Ainsi, l'introduction de charges inertes, telles les fibres de renforcement, augmente la viscosité initiale du produit. De plus, elles diminuent la densité des groupements fonctionnels chimiques entraînant un ralentisssement de la vitesse de polymérisation et encore, l'adhésion matière plastique renforcée/substrat transparent est affaiblie.

Un compromis doit donc être trouvé afin de conférer au matériau une rigidité telle que le module de flexion de la matière plastique soit supérieur à 7000 MPa et, de préférence supérieur à 10000 MPa, une bonne adhésion substrat transparent/matière plastique renforcée et une facilité de mise en oeuvre de la technique d'encapsulation.

Un taux de fibres de renforcement supérieur à 50 % en poids de la matière plastique renforcée procure généralement des difficultés de moulage par injection. Par ailleurs, si le taux de fibres est inférieur à 10 %, le matériau composite ne possède généralement pas une rigidité suffisante pour être utilisé comme matériau d'encapsulation en l'absence d'un cadre de renforcement. Ainsi, de préférence selon l'invention, la proportion des fibres de renforcement est de 10 à 50 % en poids de la matière plastique.

De plus, si les fibres de renforcement ont une longueur supérieure à 15 mm, elles peuvent se briser lors du moulage. Une longueur inférieure à 5 mm ne confère pas généralement à la matière plastique une rigidité suffisante pour être utilisée comme matériau d'encapsulation, en l'absence d'un cadre de renforcement. Ainsi, de préférence selon un mode de réalisation de l'invention, la longueur des fibres de renforcement est comprise entre 5 et 15 mm.

La matière plastique choisie selon l'invention présente, outre une grande rigidité, d'autres avantages.

Il s'agit d'une matière plastique à base d'une résine bas retrait, présentant une bonne adhésion vis-à-vis du verre ; avantageusement, elle possède une très bonne résistance au vieillissement dans les conditions d'utilisation du vitrage. En outre, elle permet la fabrication d'un profil qui affleure la face extérieure du substrat. Elle possède une bonne aptitude au moulage, en particulier au moulage par injection.

La matière plastique renforcée doit posséder un faible retrait. On appelle retrait une contraction à la suite d'un refroidissement et/ou d'une réaction chimique.

Un faible retrait est nécessaire pour au moins deux raisons essentielles :
■ le vitrage encapsulé doit conserver la même géométrie et les mêmes cotes que le moule,
■ les contraintes subies par le substrat transparent, tel le verre, doivent être minimes, sachant que les contraintes occasionnées par un retrait relativement important peuvent aboutir à la casse du verre.

Les résines utilisées selon l'invention présentent généralement un retrait de l'ordre de 0,5 à 0,7 %. Selon l'invention, la matière plastique renforcée a un retrait inférieur à 0,1 % et, de préférence, inférieur à 0,05 %.

Selon l'invention, les résines utilisées possèdent la caractéristique de mouiller fortement les fibres de renforcement, de préférence les fibres de verre, ainsi que la surface du verre.

Cette caractéristique est essentielle car les fibres doivent être réparties de façon homogène dans la résine afin que le matériau présente une uniformité de ses propriétés dans l'espace. De plus, un bon mouillage de la surface du verre permet d'augmenter l'adhésion verre/matière plastique renforcée.

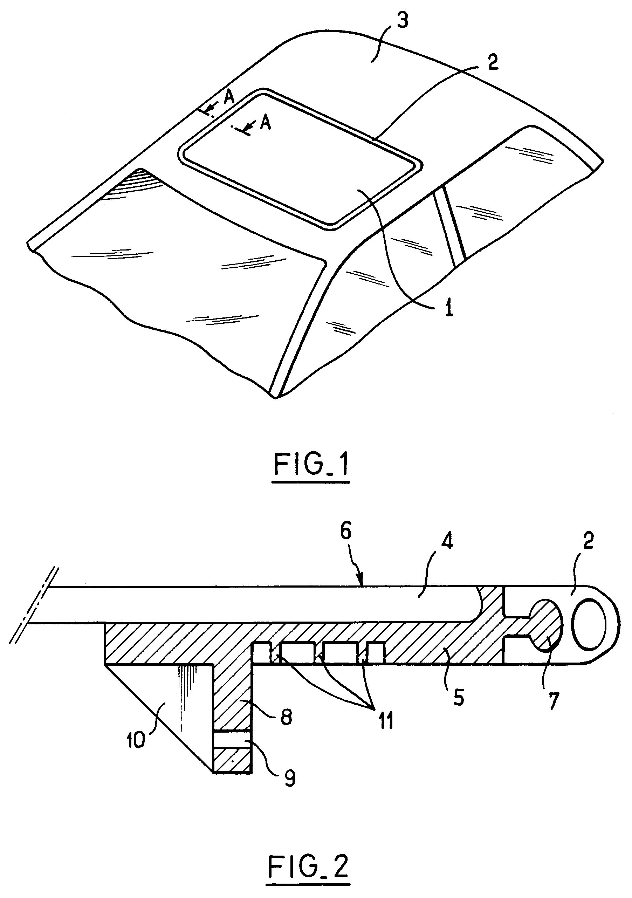

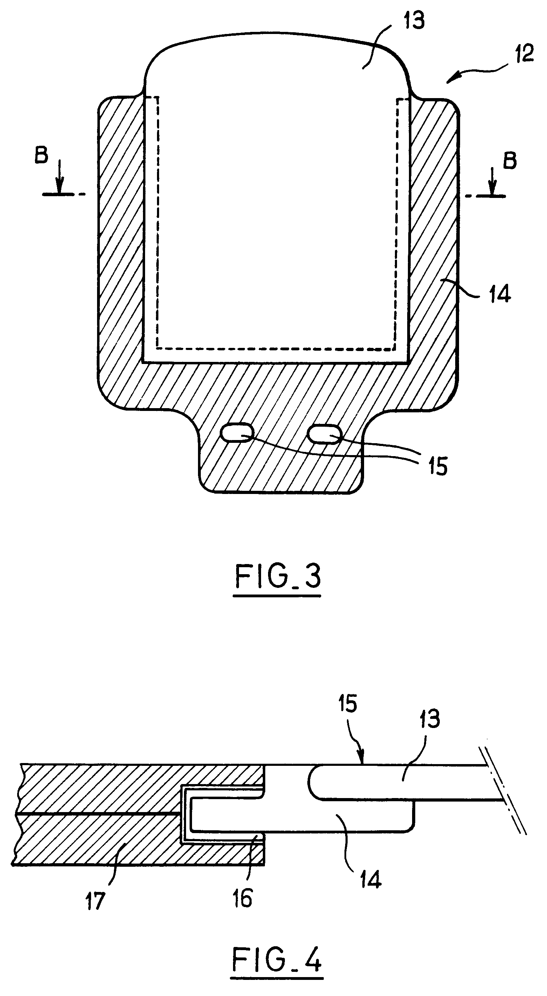

D'autres caractéristiques et avantages de l'invention apparaîtront au cours de la description qui va suivre, d'exemples de réalisation faite en référence aux figures :
■ la figure 1 est une vue, en perspective, d'un toit ouvrant de véhicule dont le panneau mobile est représenté en position fermée,
■ la figure 2 est une vue, en coupe, suivant la ligne A-A de la figure 1, d'un toit ouvrant de véhicule avec un panneau mobile en verre,
■ la figure 2 représente une coupe d'une vitre coulissante d'un véhicule automobile,
■ la figure 4 est une vue, en coupe, suivant la ligne B-B de la figure 3, d'une vitre coulissante en verre.

Sur la figure 1, le panneau mobile 1 est représenté en position fermée. Le joint profilé 2 assure l'étanchéité entre le panneau mobile 1 et le pavillon fixe 3.

Sur la figure 2, le substrat transparent 4, formant le corps du panneau mobile 1, est en verre. Le profil en matière plastique renforcée 5, obtenu par encapsulation, entoure une partie marginale du substrat 4 et affleure sa face extérieure 6.

Le profil en matière plastique renforcée 5 forme à la fois un téton 7 (vu en section), élément de fixation du joint profilé 2, une nervure 8 présentant un alésage 9 permettant la fixation du dispositif de coulissement annexe, non représenté, et des éléments rigidifiant l'ensemble, à savoir une équerre 10 et des nervures 11.

La figure 3 représente, en vue de face de l'extérieur, une vitre coulissante 12 selon l'invention, obtenue par encapsulation d'une feuille de verre 13. La vitre coulissante 12 est entourée, sur une partie marginale, par un profil 14 en matière plastique renforcée. Ce profil 14 comporte des alésages 15 permettant la fixation du vitrage au système de montée-baisse, non représenté.

La figure 4 est une coupe suivant la ligne B-B de la figure 3. Le profil 14 affleure la face visible de l'extérieur 15 de la feuille de verre 13. Un joint en feutre 16 assure l'étanchéité entre le profil en plastique 14 et la carrosserie du véhicule 17.

Les exemples suivants illustrent des formulations possibles pour la matière plastique utilisée selon l'invention.

### EXEMPLE 1

La composition d'une matière plastique pouvant être utilisée pour l'encapsulation d'un panneau pour toit ouvrant est la suivante, les différents composants étant exprimés en parties en poids :

| | |
|---|---|
| polyvinylester | 21 |
| fibres de verre | 22 |
| additif de retrait | 9 |
| catalyseur | 1,7 |
| pigment noir | 1 |
| charge (CaCO₃) | 52 |
| démoulant (stéarate) | 1,5 |

Les fibres de verre, du type verre textile E, ont une longueur comprise entre 6 et 13 mm.

Cette matière plastique présente alors une densité de 1,86.

Les caractéristiques mécaniques obtenues après moulage sont :

| | |
|---|---|
| ■ retrait | 0,02 à 0,04 % |
| ■ module en flexion | 13000 MPa |
| ■ choc charpy | 0,52 J/cm³ |
| ■ contrainte de rupture en traction | 32 MPa |
| ■ contrainte de rupture en flexion | 79 MPa |

### EXEMPLE 2

Une autre composition d'une matière plastique, pouvant être utilisée pour l'encapsulation d'un panneau pour toit ouvrant est la suivante, les différents composants étant exprimés en parties en poids :

| | |
|---|---|
| polyester aromatique insaturé | 17 |
| polymère thermoplastique | 11 |
| styrène | 0,65 |
| fibres de verre | 20 |
| catalyseur | 1,25 |
| charge (CaCO₃) | 50 |
| stabilisant (parabenzoquinone) | 0,01 |

Les fibres de verre ont une longueur comprise entre 5 et 15 mm.

Les caractéristiques mécaniques obtenues après moulage sont :

| | |
|---|---|
| ■ module en flexion | 10500 MPa |
| ■ contrainte de rupture en traction | 32 MPa |
| ■ contrainte de rupture en flexion | 79 MPa. |

## Revendications

1. Vitrage encapsulé (1, 12) comprenant un substrat transparent (4, 13) monolithique ou feuilleté, entouré sur au moins une partie de sa périphérie d'un profil (5, 14) en une matière plastique, obtenu par encapsulation du substrat transparent, la matière plastique étant injectée dans un moule, caractérisé en ce que la matière plastique injectée comprend une résine bas retrait et 10 à 50 % de fibres de renforcement en poids de la matière plastique, le module en flexion de la matière plastique formant ledit profil étant supérieur à 7000 MPa et, de préférence, supérieur à 10000 MPa.

2. Vitrage encapsulé selon la revendication 1, caractérisé en ce que la matière plastique est choisie parmi des copolymères du type acrylonitrile/butadiène/styrène, styrène/acrylonitrile ou des polymères du type polyacétals, polycarbonates, polyamides 6, polyamides 6/6, polyphénylène-oxydes ou polyesters.

3. Vitrage selon la revendication 2, caractérisé en ce que la matière plastique est un polyester.

4. Vitrage selon la revendication 3, caractérisé en ce que la matière plastique est un polyvinylester.

5. Vitrage selon une des revendications 1 à 4, caractérisé en ce que la longueur des fibres de renforcement est comprise entre 5 et 15 mm.

6. Vitrage selon une des revendications 1 à 5, caractérisé en ce que les fibres de renforcement sont des fibres de verre.

7. Vitrage selon une des revendications 1 à 6, caractérisé en ce que le substrat transparent est constitué d'au moins une feuille de verre.

8. Vitrage selon une des revendications 1 à 7, caractérisé en ce qu'il comporte des éléments de structure (10, 11) renforçant sa rigidité.

9. Vitrage selon la revendication 8, caractérisé en ce qu'au moins une partie des éléments de structure sont obtenus par l'encapsulation à partir de la matière plastique renforcée.

10. Vitrage selon une des revendications 1 à 9, caractérisé en ce qu'il comporte des éléments fonctionnels.

11. Vitrage selon la revendication 10, caractérisé en ce qu'au moins une partie des éléments fonctionnels sont moulés selon la technique d'encapsulation à partir de la matière plastique renforcée.

12. Vitrage selon une des revendications 1 à 11, caractérisé en ce que le retrait de la matière plastique renforcée est inférieur à 0,1 % et, de préférence, inférieur à 0,05 %.

13. Vitrage selon une des revendications 1 à 12, caractérisé en ce que la matière plastique affleure la surface extérieure du substrat.

14. Vitrage selon une des revendications 1 à 13, caractérisé en ce qu'il constitue le panneau mobile d'un toit ouvrant d'un véhicule à moteur.

15. Vitrage selon une des revendications 1 à 13, caractérisé en ce qu'il constitue une vitre coulissante.

## Claims

1. Encapsulated pane (1, 12), comprising a monolithic or laminated transparent substrate (4, 13), surrounded along at least a part of its periphery by a profile (5, 14) of plastics material produced by encapsulation of the transparent substrate, the plastics material being injected into a mould, characterized in that the injected plastics material comprises a low-shrinkage resin and 10 to 50% by weight relative to the plastics material of reinforcing fibres, the bending modulus of the plastics material forming said profile being greater than 7,000 MPa and, preferably, greater than 10,000 MPa.

2. Encapsulated pane according to Claim 1, characterized in that the plastics material is selected from among copolymers of the acrylonitrile/butadiene/styrene or styrene/acrylonitrile type or polymers of the type of polyacetals, polycarbonates, polyamides 6, polyamides 6/6, polyphenylene oxides or polyesters.

3. Pane according to Claim 2, characterized in that the plastics material is a polyester.

4. Pane according to Claim 3, characterized in that the plastics material is a polyvinyl ester.

5. Pane according to one of Claims 1 to 4, characterized in that the length of the reinforcing fibres is from 5 to 15 mm.

6. Pane according to one of Claims 1 to 5, characterized in that the reinforcing fibres are glass fibres.

7. Pane according to one of Claims 1 to 6, characterized in that the transparent substrate is constituted of at least one glass sheet.

8. Pane according to one of Claims 1 to 7, characterized in that it comprises structural elements (10, 11) reinforcing its rigidity.

9. Pane according to Claim 8, characterized in that at least some of the structural elements are produced by the encapsulation from the reinforced plastics material.

10. Pane according to one of Claims 1 to 9, characterized in that it comprises functional elements.

11. Pane according to Claim 10, characterized in that at least some of the functional elements are moulded by the encapsulation technique from the reinforced plastics material.

12. Pane according to one of Claims 1 to 11, characterized in that the shrinkage of the reinforced plastics material is less than 0.1% and, preferably, less than 0.05%.

13. Pane according to one of Claims 1 to 12, characterized in that the plastics material is flush with the outer face of the substrate.

14. Pane according to one of Claims 1 to 13, characterized in that it forms the movable panel of an opening roof for a motor vehicle.

15. Pane according to one of Claims 1 to 13, characterized in that it forms a sliding window pane.

## Patentansprüche

1. Ummantelte Verglasung (1, 12), umfassend ein durchsichtiges Einscheiben- oder Verbundsubstrat (4, 13), das in wenigstens einem Teil seines Umfangs von einem Profil (5, 14) aus einem Kunststoff umgeben ist, hergestellt durch Ummantelung des durchsichtigen Substrats, wobei der Kunststoff in eine Form eingespritzt wird, **dadurch gekennzeichnet, daß** der eingespritzte Kunststoff ein Harz mit niedriger Schrumpfung und 10 bis 50 Gew.% Verstarkungsfasern, bezogen auf den Kunststoff, umfaßt und das Biegemoment des das Profil bildenden Kunststoffs über 7000 MPa und vorzugsweise über 10000 MPa liegt.

2. Ummantelte Verglasung nach Anspruch 1, **dadurch gekennzeichnet, daß** der Kunststoff aus Copolymeren des Typs Acrylnitril-Butadien-Styrol und Styrol-Acrylnitril oder Polymeren des Typs der Polyacetale, Polycarbonate, Polyamide 6, Polyamide 66, Polyphenylenoxide oder Polyester ausgewählt ist.

3. Verglasung nach Anspruch 2, **dadurch gekennzeichnet, daß** der Kunststoff ein Polyester ist.

4. Verglasung nach Anspruch 3, **dadurch gekennzeichnet, daß** der Kunststoff ein Polyvinylester ist.

5. Verglasung nach einem der Ansprüche 1 bis 4, **dadurch gekennzeichnet, daß** die Länge der Verstärkungsfasern 5 bis 15 mm beträgt.

6. Verglasung nach einem der Ansprüche 1 bis 5, **dadurch gekennzeichnet, daß** die Verstärkungsfasern Glasfasern sind.

7. Verglasung nach einem der Ansprüche 1 bis 6, **dadurch gekennzeichnet, daß** das durchsichtige Substrat aus wenigstens einer Glasscheibe besteht.

8. Verglasung nach einem der Ansprüche 1 bis 7, **dadurch gekennzeichnet, daß** sie Strukturelemente (10, 11) enthält, die ihre Steifigkeit verstärken.

9. Verglasung nach Anspruch 8, **dadurch gekennzeichnet, daß** wenigstens ein Teil der Strukturelemente durch Ummantelung ausgehend von dem verstärkten Kunststoff hergestellt ist.

10. Verglasung nach einem der Ansprüche 1 bis 9, **dadurch gekennzeichnet, daß** sie Funktionselemente enthält.

11. Verglasung nach Anspruch 10, **dadurch gekennzeichnet, daß** wenigstens ein Teil der Funktionselemente ausgehend von dem verstärkten Kunststoff gemäß dem Ummantelungsverfahren aufgeformt ist.

12. Verglasung nach einem der Ansprüche 1 bis 11, **dadurch gekennzeichnet, daß** die Schrumpfung des verstärkten Kunststoffs weniger als 0,1 und vorzugsweise weniger als 0,05 % beträgt.

13. Verglasung nach einem der Ansprüche 1 bis 12, **dadurch gekennzeichnet, daß** der Kunststoff mit der Außenseite des Substrats bündig abschließt.

14. Verglasung nach einem der Ansprüche 1 bis 13, **dadurch gekennzeichnet, daß** sie das bewegliche Feld eines Schiebedachs eines Motorfahrzeugs bildet.

15. Verglasung nach einem der Ansprüche 1 bis 13, **dadurch gekennzeichnet, daß** sie eine Schiebeverglasung bildet.
